# EUROPÄISCHE PATENTANMELDUNG

(11) **EP 3 533 930 A1**
(43) Veröffentlichungstag der Anmeldung: **04.09.2019**
(21) Anmeldenummer: 19154964.1
(22) Anmeldetag: 01.02.2019
(51) Int. Cl.: E01C 19/05, E01C 19/10, F26B 11/04, F16B 21/10, F26B 23/02, F26B 25/00

(54) **VERFAHREN ZUM BEREITSTELLEN EINES GEREGELTEN UNTERDRUCKS IN MINDESTENS EINER TROCKENTROMMEL EINER ANLAGE ZUR ASPHALTHERSTELLUNG SOWIE DERARTIGE ANLAGE ZUR ASPHALTHERSTELLUNG**

(30) Priorität: 02.03.2018 DE 102018203196; 24.10.2018 EP 18202312
(71) Anmelder: Benninghoven GmbH & Co. KG, 54516 Wittlich (DE)
(72) Erfinder: Renk, Christian, 54538 Bengel (DE)
(74) Vertreter: Rau, Schneck & Hübner Patentanwälte Rechtsanwälte PartGmbB

(57) **Zusammenfassung**

Ein Verfahren zum Bereitstellen eines geregelten Unterdrucks in mindestens einer Trockentrommel (2, 8) einer Anlage (1) zur Asphaltherstellung weist die Verfahrensschritte Trocknen von Material in der mindestens einen Trockentrommel (2, 8), Absaugen von Staub aus der mindestens einen Trockentrommel (2, 8) mittels eines über einen Rohgaskanal (6) an die mindestens eine Trockentrommel (2, 8) angeschlossenen Gebläses (23), Erfassen eines den Druck in der mindestens einen Trockentrommel (2, 8) charakterisierenden Kennwertes mittels eines Sensors (4, 10, 16, 21), Übermitteln des Kennwertes an eine Regelungseinheit (25), Ermitteln einer Stellgröße für die Leistung des Gebläses (23) mittels der Regelungseinheit (25), Regeln der Leistung des Gebläses (23) mit der Stellgröße (26) auf. Darüber hinaus gibt es auch eine Anlage zur Asphaltherstellung.

## Beschreibung

Die vorliegende Patentanmeldung nimmt die Prioritäten der deutschen Patentanmeldung DE 10 2018 203 196.7 sowie der europäischen Patentanmeldung EP 18 202 312.7 in Anspruch, deren Inhalt durch Bezugnahme hierin aufgenommen wird.

Die Erfindung betrifft ein Verfahren zum Bereitstellen eines geregelten Unterdrucks in mindestens einer Trockentrommel einer Anlage zur Asphalterstellung sowie eine derartige Anlage zur Asphaltherstellung.

Eine Anlage zur Asphaltherstellung weist eine Entstaubungseinrichtung auf, um Staub, insbesondere Steinstaub, der beim Trocknen von Gesteinskörnungen anfällt, abzusaugen. Dazu wird in der Trockentrommel ein Unterdruck erzeugt. Für den Entstaubungsvorgang sind Abweichungen von Soll-Unterdruck in der Trockentrommel nachteilig. Bei zu großem Unterdruck besteht das Risiko, dass zu große Gesteinskörnungen abgesaugt werden, die die Strömungswege überproportional beanspruchen und Filtertücher beschädigen können. In Folge dessen können überhöhte Abgasemissionen auftreten. Wenn der Unterdruck zu gering ist, besteht das Risiko, dass der Volumenstrom der erzeugten Brennerflamme Staub und Abgase aus den Fugen der Trockentrommel treibt.

Der Erfindung liegt die Aufgabe zu Grunde, die Einhaltung eines Soll-Unterdrucks in mindestens einer Trockentrommel in einer Anlage zur Asphaltherstellung zuverlässig einzuhalten.

Die Aufgabe ist mit einem Verfahren mit den in Anspruch 1 angegebenen Merkmalen und mit einer Anlage mit den in Anspruch 12 angegebenen Merkmalen gelöst.

Erfindungsgemäß wurde erkannt, dass ein Soll-Unterdruck in einer Trockentrommel einer Anlage zur Asphaltherstellung mittels eines Sensors überwacht und mittels einer Regelungseinheit sowie einem damit in Signal Verbindung stehenden Gebläses zuverlässig geregelt werden kann. Die Anlage zur Asphaltherstellung umfasst insbesondere mehrere Trockentrommeln, insbesondere mindestens zwei, insbesondere mindestens drei und insbesondere mindestens vier oder mehr Trockentrommeln. Die Einhaltung des Soll-Unterdrucks in der Trockentrommel ist sichergestellt. Das erfindungsgemäße Verfahren und die erfindungsgemäße Anlage ermöglichen eine erhöhte Energieeffizienz, sodass der Gesamtwirkungsgrad des Verfahrens und der Anlage erhöht sind. Das erfindungsgemäße Regelverfahren ist sehr robust insbesondere im Vergleich zu einer Regelung des Unterdrucks mittels eines Sensors, der zum Messen des Gesamt-Unterdrucks auf Basis einer Gebläsedrehzahl geeignet ist, in einem Parallelbetrieb mehrerer Trockentrommeln. Dadurch, dass ein Ist-Unterdruck in einer Trockentrommel erfasst wird, können Störungen im Volumenstrom beispielsweise durch Zugabe von zu trocknendem Material in der Trockentrommel und/oder einer Veränderung des Volumenstroms in der Absaugung, direkt und unmittelbar ausgeregelt werden. Das Regelverhalten, insbesondere die Reaktionszeit und der Einschwenkvorgang des Regelverfahrens, sind sehr klein. Die Stelldynamik des Gebläses kann groß gewählt werden, insbesondere doppelt so groß wie die Dynamik möglicher Drosselelemente.

Zum Bereitstellen des geregelten Unterdrucks in einer Trockentrommel, in der Material getrocknet wird und aus der Staub über einen Rohgaskanal und ein daran angeschlossenes Gebläse abgesaugt wird, wird ein Kennwert mittels eines Sensors erfasst. Der Kennwert charakterisiert den aktuellen Druck in der Trockentrommel, also den Ist-Unterdruck. Der ermittelte Kennwert wird an eine Regelungseinheit übermittelt, die mit dem Sensor in Signalverbindung steht. In der Regelungseinheit wird anhand des erfassten Kennwertes eine Stellgröße für die Leistung des Gebläses ermittelt und an das Gebläse, das mit der Regelungseinheit in Signalverbindung steht, übermittelt. Die Leistung des Gebläses wird anhand der Stellgröße angepasst, um den Ist-Unterdruck an den vorgegebenen Soll-Unterdruck zu regeln. Das Gebläse ist insbesondere ein Sauggebläse.

Bei einem Verfahren gemäß Anspruch 2 kann die Leistung des Gebläses unmittelbar und unkompliziert angepasst werden. Insbesondere ist das Gebläse frequenzgeregelt. Die Drehzahl des Gebläses und damit die Leistung des Gebläses sind unmittelbar beeinflussbar. Die Reaktionszeit der Regelung ist verkürzt.

Ein Verfahren gemäß Anspruch 3 ermöglicht eine mittelbare Erfassung des charakterisierenden Kennwerts. Die Erfassung des Kennwerts ist unaufwendig. Insbesondere sind zusätzliche Sensoren entbehrlich. Es wurde gefunden, dass als charakterisierender Kennwert eine Filtereingangstemperatur und/oder eine Filterverschmutzung eines Filters genutzt werden kann, um die Leistung des Gebläses zu regeln. Zusätzlich oder alternativ kann als charakteristischer Kennwert auch die Brennerleistung und/oder die Drehzahl des Brennergebläses für die Leistungsregelung des Gebläses dienen. Der Filter ist insbesondere stromaufwärts des Gebläses an den Rohgaskanal angeschlossen. In diesem Fall ist es vorteilhaft, wenn in der Regelungseinheit mindestens eine und insbesondere mehrere Kennlinien hinterlegt sind, anhand derer die Gebläseleistung angepasst werden kann. Die Kennlinien dienen zur Parameteranpassung an einen Regler der Sollfrequenzvorgabe des Gebläses. Dem liegt die Erkenntnis zu Grunde, dass sich die Rohgasdichte mit der am Filtereingang gemessenen Temperatur in dem Rohgaskanal verändert. Zudem wurde erkannt, dass die Filterverschmutzung als Differenzdruckmessung vor und hinter dem Filter ermöglicht werden kann.

Bei einem Verfahren gemäß Anspruch 4 kann als charakterisierender Kennwert der Ist-Unterdruck mittels eines Trockentrommel-Drucksensors unmittelbar erfasst werden. Es ist insbesondere möglich, die Anpassung der Gebläseleistung, also die Ermittlung der Stellgröße für die Leistungsregelung des Gebläses anhand des Kennwertes zu regeln, der mit dem Trockentrommel-Drucksensor erfasst worden ist. Hierzu können Kennlinien verwendet werden, die in der Regelungseinheit hinterlegt sind. Dazu kann es vorteilhaft sein, wenn die hinterlegten Kennlinien zur Ermittlung der Stellgröße basierend auf Filter-Kenngrößen angepasst, insbesondere gekippt und/oder verformt werden. Das Anpassen der Kennlinien erfolgt beispielsweise durch Verändern von mindestens einem Regelparameter, der für die Regelung des Verfahrens in der Regelungseinheit verantwortlich sind. Durch die Anpassung der Kennlinien kann die Regelung auf einen aktuellen Ist-Anlagenzustand auf Regelabweichungen reagieren. Die Regelung des Anlagenzustands erfolgt schnell und robust.

Bei einem Verfahren gemäß Anspruch 5 kann ein Ist-Unterdruck des Rohgaskanals als Kennwert verwendet werden. Dazu dient ein Rohgaskanal-Drucksensor, der mit der Regelungseinheit in Signalverbindung steht.

Ein Regelungsverfahren gemäß Anspruch 6 ist unkompliziert und ermöglicht schnelle Zugriffszeiten, insbesondere ein schnelles Regelverhalten. Die Stellgröße kann insbesondere unmittelbar anhand einer hinterlegten Kennlinie abgelesen werden. Sofern für einen aktuellen Betriebspunkt, also einen Ist-Anlagenzustand, keine Kennlinie hinterlegt ist, werden die Regelparameter der Kennlinie entsprechend angepasst.. Der Betriebspunkt ist insbesondere abhängig von zu trocknendem Material, Temperatur und/oder Soll-Druck in der Trockentrommel.

Ein Verfahren gemäß Anspruch 7 ermöglicht die Einhaltung eines Ist-Unterdrucks in mehreren Trockentrommeln, wobei insbesondere in einer ersten Trockentrommel frisches Material getrocknet wird. Die erste Trockentrommel wird dann als Weiß-Trockentrommel bezeichnet. In einer zweiten Trockentrommel, die dann als Recycling-Trockentrommel bezeichnet wird, kann Recycling-Material getrocknet werden. Insbesondere ist es möglich, den Ist-Unterdruck in mehreren Trockentrommeln gleichzeitig zu regeln. Der Unterdruck in den Trockentrommeln kann unterschiedlich fest gelegt sein.

Ein Verfahren gemäß Anspruch 8 ist insbesondere dann vereinfacht, wenn mehrere Trockentrommeln in einer Anlage existieren, aber ausschließlich eine Trockentrommel genutzt wird.

Ein Verfahren gemäß Anspruch 9 ermöglicht ein vereinfachtes und unkompliziertes Regeln des Ist-Unterdrucks in der zweiten Trockentrommel, indem, insbesondere entlang eines Abgaskanals, der Strömungsquerschnitt angepasst wird. Dies kann vorteilhafter Weise mittels eines Drosselelements erfolgen. Das Drosselelement ist beispielsweise mindestens eine Drosselklappe und/oder mindestens ein frequenzgeregelter Ventilator.

Ein Verfahren gemäß Anspruch 10 ermöglicht die Anpassung der Unterdrücke in den Trockentrommeln, auch wenn die Maximalleistung des Gebläses für die Einhaltung der Soll-Unterdruckwerte in den Trockentrommeln rechnerisch nicht ausreicht.

Ein Verfahren gemäß Anspruch 11 gewährleistet einen Sicherheitsbetrieb, insbesondere innerhalb der Entstaubungsanlage, für den Fall, dass der Sensor ausfällt. Dadurch ist ein unkontrollierter, insbesondere sicherheitsgefährdender Betrieb der Anlage verhindert.

Eine Anlage gemäß Anspruch 12 weist im Wesentlichen die Vorteile des erfindungsgemäßen Verfahrens auf, worauf hiermit verwiesen wird. Wesentlich ist, dass die Anlage mindestens eine Trockentrommel und ein über einen Rohgaskanal an die Trockentrommel angeschlossenes Gebläse aufweist, um Staub aus der Trockentrommel abzusaugen. Wesentlich ist ferner, dass ein Sensor vorgesehen ist, um den Ist-Unterdruck in der Trockentrommel mittels eines charakterisierenden Kennwertes zu erfassen und auf Basis dessen in der Regelungseinheit eine Stellgröße für die Leistungsanpassung des Gebläses auf Basis des erfassten Kennwerts bereitzustellen.

Eine Anlage gemäß Anspruch 13 weist zwei Trockentrommeln auf, die insbesondere zum Trocknen von frischem Mineral und von Recycling-Material dienen. Die Trockentrommeln sind jeweils über einen Abgaskanal an den Rohgaskanal angeschlossen.

Eine Anlage gemäß Anspruch 14 ermöglicht eine vereinfachte Ermittlung des charakterisierenden Kennwerts in einem Filter Entstaubungsanlage. Eine Anlage gemäß Anspruch 15 ermöglicht auch die Berücksichtigung von Absaugluft, die aus einem Mischer, in dem getrocknetes Gesteinsmaterial vermischt wird, angeschlossen ist.

Weitere Vorteile, Einzelheiten und Merkmale der Erfindung werden nachfolgend anhand der Beschreibung eines Ausführungsbeispiels in der Zeichnung näher erläutert. Es zeigen:
- Fig. 1: eine schematische Gesamtansicht einer Anlage zur Durchführung des erfindungsgemäßen Verfahrens,
- Fig. 2: eine Fig. 1 entsprechende Darstellung, wobei ausschließlich eine erste Trockentrommel in Betrieb ist,
- Fig. 3: eine Fig. 1 entsprechende Darstellung, wobei ausschließlich eine zweite Trockentrommel in Betrieb ist,
- Fig. 4: eine Fig. 1 entsprechende Darstellung, wobei ausschließlich ein Mischer zur Asphaltherstellung in Betrieb ist,
- Fig. 5: eine Fig. 1 entsprechende Darstellung, wobei die beiden Trockentrommeln parallel betrieben werden,
- Fig. 6: eine Fig. 1 entsprechende Darstellung, wobei die beiden Trockentrommeln und die Absaugung des Mischers in Betrieb sind,
- Fig. 7: eine Fig. 1 entsprechende Darstellung, wobei ein Grenzzustand der beiden Trockentrommeln geregelt wird.

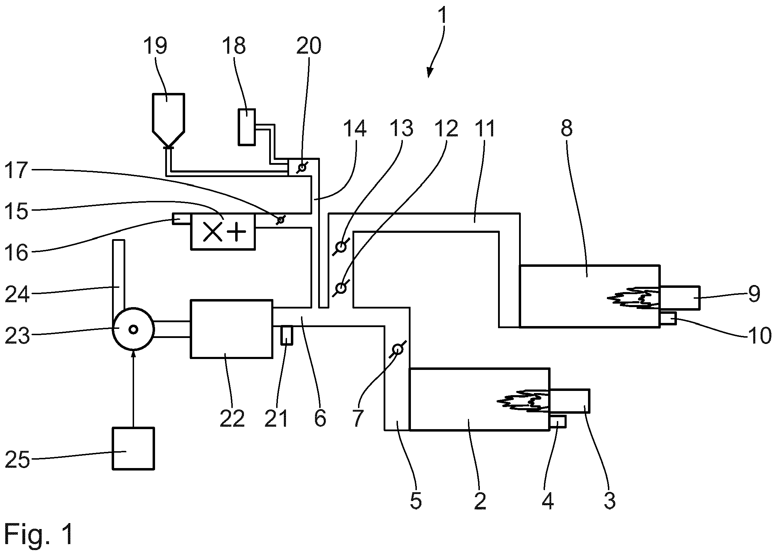

Eine in Fig. 1 als Ganzes mit 1 bezeichnete Anlage dient zur Entstaubung an einer Asphaltmischanlage. Die Anlage 1 umfasst eine erste Trockentrommel 2, in der insbesondere frisches Mineral getrocknet wird. Die erste Trockentrommel 2 ist eine Weiß-Trommel. An der ersten Trockentrommel 2 ist ein erster Brenner 3 angeschlossen, der zum Erwärmen, also zum Trocknen des frischen Minerals in der ersten Trockentrommel 2 dient. Der erste Brenner 3 ist insbesondere an einer Stirnseite der im Wesentlichen zylindrisch ausgeführten ersten Trockentrommel 2 angeordnet. Die Flamme des ersten Brenners 3 ist in die erste Trockentrommel 2 hineingerichtet.

Der ersten Trockentrommel 2 wird über einen nicht dargestellten Materialzulauf Gesteinsmaterial, insbesondere frisches Mineral, zugeführt. Über einen nicht dargestellten Materialauslauf, wird das in der ersten Trockentrommel 2 getrocknete frische Mineral abgeführt. Die erste Trockentrommel 2 wird insbesondere im Gegenstromverfahren betrieben. Das bedeutet, dass der Materialfluss entlang der ersten Trockentrommel 2 der Brennerflamme des ersten Brenners 3 entgegengerichtet ist. Gemäß der Darstellung in Fig. 1 erfolgt der Materialstrom von links nach rechts. Die erste Trockentrommel 2 kann auch im Gleichstromverfahren betrieben werden.

Die erste Trockentrommel 2 weist einen ersten Trockentrommel-Drucksensor 4 auf. Der erste Trockentrommel-Drucksensor 4 ist geeignet, den Ist-Unterdruck als Druckwert der ersten Trockentrommel 2 zu erfassen. Der erste Trockentrommel-Drucksensor 4 ist insbesondere stirnseitig an der ersten Trockentrommel 2, insbesondere benachbart zu dem ersten Brenner 3, angeordnet. Der erste Trockentrommel-Drucksensor 4 kann auch an einer anderen Stelle der ersten Trockentrommel 2 angeordnet sein. Wesentlich ist, dass mittels des ersten Trockentrommel-Drucksensors 4 ein den Ist-Unterdruck in der ersten Trockentrommel 2 charakterisierender Messwert ermittelt werden kann.

Die erste Trockentrommel 2 ist mittels eines ersten Abgaskanals 5 an einen Rohgaskanal 6 der Anlage 1 angeschlossen. Der Abgaskanal 5 ist insbesondere stirnseitig an der ersten Trockentrommel 2 angeschlossen, insbesondere an der dem ersten Brenner 3 gegenüberliegenden Stirnseite der ersten Trockentrommel 2.

Entlang des ersten Abgaskanals 5 ist ein erstes Drosselelement 7 angeordnet. Das erste Drosselelement 7 dient zur Regulierung des Absaugquerschnitts des ersten Abgaskanals 5. Gemäß dem gezeigten Ausführungsbeispiel ist das erste Drosselelement als Drosselklappe ausgeführt. Anstelle der Drosselklappe oder zusätzlich zu der Drosselklappe kann auch ein frequenzgeregelter Ventilator mit Absperrklappen zum Einsatz kommen. Insbesondere umfasst das erste Drosselelement 7 mehrere Drehklappen, die über den Leitungsquerschnitt verteilt, insbesondere benachbart zueinander, angeordnet sind.

Die Anlage 1 weist ferner eine zweite Trockentrommel 8 auf, die zum Trocknen von recyceltem Asphaltmaterial dient. Die zweite Trockentrommel ist eine Recycling-Trockentrommel. Die Ausgestaltung der zweiten Trockentrommel 8 ist im Wesentlichen mit der Ausgestaltung der ersten Trockentrommel 2 identisch, worauf hiermit verwiesen wird. Insbesondere weist die zweite Trockentrommel 8 einen zweiten Brenner 9 und einen zweiten Trockentrommel-Drucksensor 10 auf. Die zweite Trockentrommel 8 ist über einen zweiten Abgaskanal 11 an den Rohgaskanal 6 angeschlossen. Entlang des zweiten Abgaskanals 11 ist ein zweites Drosselelement 12 in Form einer zweiten Drosselklappe vorgesehen. Entsprechend kann das zweite Drosselelement auch als frequenzgeregelter Ventilator mit Absperrklappen ausgeführt sein.

Entlang des zweiten Abgaskanals 11 ist stromaufwärts des zweiten Drosselelements 12 eine Brandschutzklappe 13 angeordnet.

An den Rohgaskanal 6 ist ein Neben-Absaugkanal 14 angeschlossen. Über den Neben-Absaugkanal 14 ist ein Mischer 15 angeschlossen. Im Mischer 15 wird Gesteinsmaterial gemischt. Insbesondere werden mehrere Gesteinsmaterialien und/oder Zuschlagstoffe, die für die Herstellung von Asphaltmaterial verwendet werden, in dem Mischer 15 vermischt. Der Mischer 15 weist einen Mischer-Drucksensor 16 auf.

Entlang des Nebenabsaugkanals 14 ist stromabwärts des Mischers 15 eine Expansionsklappe 17 angeordnet. Die Expansionsklappe 17 dient insbesondere zum Ableiten eines Dampfschlages, der insbesondere im sogenannten Kalt-Recycling-Mischbetrieb auftreten kann. Die Expansionsklappe 17 kann auch als frequenzgeregelter Ventilator mit Absperrklappe ausgeführt sein.

Über den Neben-Absaugkanal 14 sind gemäß dem gezeigten Ausführungsbeispiel ferner ein Mischturm 18 und ein Verladesilo 19 angeschlossen und mittels eines dritten Drosselelements 20 in dem Nebenabsaugkanal 14 trennbar.

Der Rohgaskanal 6 dient zum Absaugen von Staub, der auch als Füller bezeichnet wird, der insbesondere in der ersten Trockentrommel 2 und/oder der zweiten Trockentrommel 8 anfällt. Mittels des Rohgaskanals 6 können auch Wasserdampf und/oder Verbrennungsabgase, insbesondere aus den Trockentrommeln 2, 8 abgesaugt werden.

Entlang des Rohgaskanals 6 ist ein Rohgaskanal-Drucksensor 21 angeordnet, der zur Erfassung eines Druckwerts in dem Rohgaskanal 6 dient. Der Druckwert in dem Rohgaskanal 6 ist insbesondere ein Ist-Unterdruck.

Stromabwärts des Rohgaskanal-Drucksensors 21 ist ein Filter 22 angeordnet, um insbesondere Staub in dem abgesaugten Abgas auszufiltern.

In dem Filter 22 ist insbesondere mindestens ein Filtertuch angeordnet, das von der mit Staub belasteten Zuluft aus den Trockentrommeln 2, 8 und/oder dem Mischer 15, dem Mischturm 18 und dem Verladesilo 19 um- bzw. durchströmt wird. Staubpartikel werden durch das Filtertuch ausgefiltert. Stromabwärts des Filters 22 ist ein Gebläse 23 an den Filter 22 und damit an den Rohgaskanal 6 angeschlossen. Das Gebläse 23 ist insbesondere ein Sauggebläse, das insbesondere frequenzgeregelt betrieben werden kann. Mittels des Sauggebläses 23 kann das in dem Filter 22 gereinigte Abgas über einen Kamin 24 an die Umgebung abgegeben werden.

Mit dem Gebläse 23 steht eine Regelungseinheit 25 in Signalverbindung. Die Regelungseinheit 25 dient zum Ermitteln einer Stellgröße für die Leistungsregelung des Gebläses 23. Als Eingangswert für die Stellgrößenermittlung dient mindestens ein charakterisierender Kennwert, der den Ist-Unterdruck in den Trockentrommeln 2, 8 charakterisiert. Mögliche Sensoren dafür sind der erste Trockentrommel-Drucksensor 4, der zweite Trockentrommel-Drucksensor 10, der Mischer-Drucksensor 16 und der Rohgaskanal-Drucksensor 21. Ferner kann als charakteristischer Kennwert die Filtereingangstemperatur und/oder die Filterverschmutzung des Filters 22 erfasst werden, wobei insbesondere für die Erfassung der Filtereingangstemperatur ein nicht näher dargestellter Temperatursensor am Filtereingang dient. Die Filterverschmutzung kann insbesondere durch Differenzdruckmessung, mittels nicht dargestellter Sensoren erfolgen. Zusätzlich oder alternativ kann die Leistung mindestens eines Brenners 3, 9 und/oder die Drehzahl von nicht näher dargestellten Brenner-Gebläsen für die Leistungsregelung des Gebläses 23 dienen. Jeweils ein Brennergebläse ist dem ersten Brenner 3 bzw. dem zweiten Brenner 9 zugeordnet. Die Brenner-Gebläse dienen für eine zusätzliche Luftzufuhr in den Brennern 3, 9.

Die Regelungseinheit 25 steht mit den genannten Sensoren jeweils in bidirektionaler Signalverbindung, wobei auch aus Vereinfachungsgründen in Fig. 1 die jeweiligen Signalverbindungen nicht dargestellt sind. Die Signalverbindungen können kabelgebunden oder kabellos erfolgen.

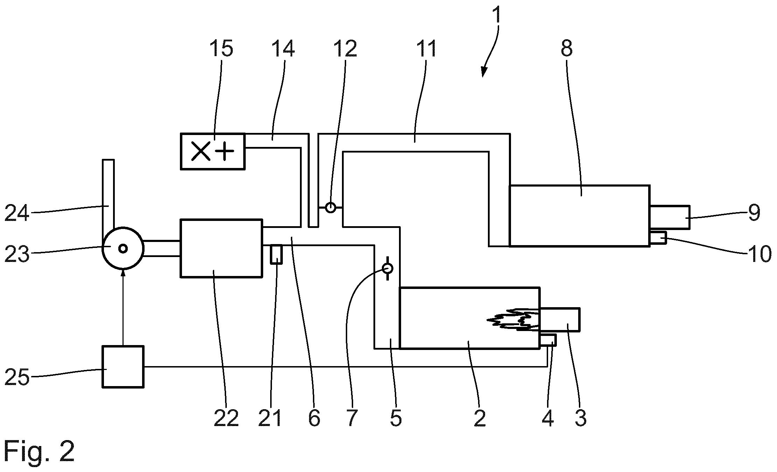

Nachfolgend wird anhand von Fig. 2 ein Verfahren zum Regeln des Ist-Unterdrucks in der ersten Trockentrommel 2 näher erläutert.

In dem Betriebszustand der Anlage 1 gemäß Fig. 2 ist ausschließlich die erste Trockentrommel 2 in Betrieb. Die zweite Trockentrommel 8 ist außer Betrieb. Das bedeutet, dass der zweite Brenner 9 der zweiten Trockentrommel 8 keine Wärme abgibt. Der erste Brenner 3 gibt Wärme in die erste Trockentrommel 2 ab. In der ersten Trockentrommel 2 wird Weißmineral getrocknet. Um Abgas aus der ersten Trockentrommel 2 möglichst effizient abzusaugen, befindet sich das erste Drosselelement 7 in der vollständig geöffneten Stellung. Der erste Abgaskanal 5 ist zu 100 % geöffnet.

Der zweite Abgaskanal 11 ist durch die Schließanordnung des zweiten Drosselelements 12 geschlossen. In der Schließanordnung ist eine Fluidströmung durch den zweiten Abgaskanal 11 von der zweiten Trockentrommel 8 in den Rohgaskanal 6 verhindert.

Mittels des ersten Trockentrommel-Drucksensors 4 wird der Ist-Unterdruck in der ersten Trockentrommel 2 erfasst. Der so erfasste Kennwert wird von dem ersten Trockentrommel-Drucksensor 4 an die Regelungseinheit 25 übermittelt. In der Regelungseinheit 25 wird auf Basis des so ermittelten Kennwerts eine Stellgröße für die Leistung des Gebläses 23 ermittelt und als Stellgröße an das Gebläse 23 weitergegeben. In Abhängigkeit der Stellgröße wird die Leistung des Gebläses 23 angepasst, um den geforderten Soll-Unterdruck in der ersten Trockentrommel 2 einzuhalten.

Wie vorstehend erläutert, kann die Leistungsregelung für das Gebläse 23 in der Regelungseinheit 25 auch mittelbar dadurch erfolgen, dass Kenngrößen des Filters 22 erfasst werden, insbesondere die Filtereingangstemperatur und/oder die Filterverschmutzung. Zusätzlich oder alternativ können als charakteristische Kenngröße für die Regelung die Brennerleistungen und/oder die Drehzahlen der Brenner-Gebläse dienen. Dazu dienen in der Regelungseinheit 25 hinterlegte Kennlinien, um die für den Soll-Unterdruck erforderliche Leistung zu ermitteln. Anhand der gemessenen Größen für Filtereingangstemperatur und/oder Filterverschmutzung können die Regelparameter der hinterlegten Kennlinien, insbesondere durch Interpolation, entsprechend angepasst werden, um das Regelverhalten auf den Anlagenzustand anzupassen. Alle Regelparameter werden von der Regelungseinheit 25 selbsttätig und insbesondere automatisch gewechselt, sobald ein anderer Betriebszustand der Anlage 1 eintritt. Die unterschiedlichen Parameter sind in der Regelungseinheit 25 hinterlegt. Insbesondere ist eine manuelle Anpassung der Parameter entbehrlich.

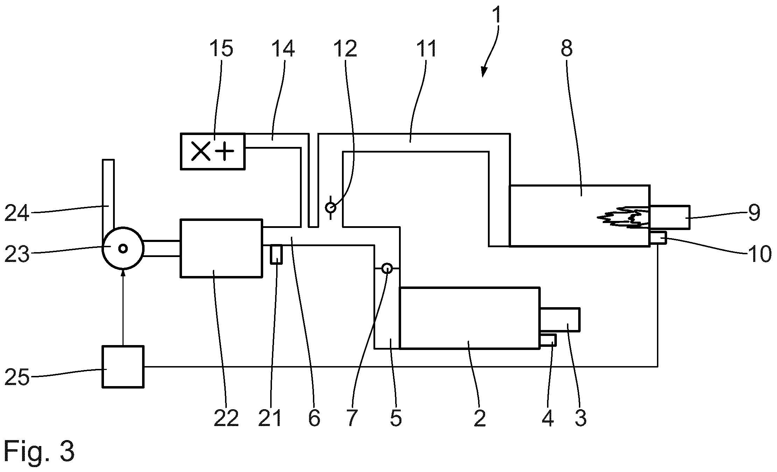

Nachfolgend wird anhand der Fig. 3 die Betriebsweise der Anlage 1 erläutert, in der ausschließlich die zweite Trockentrommel 8 in Betrieb ist.

Wenn ausschließlich Recycling-Material in der RC-Trommel 8 getrocknet wird, ist der zweite Brenner 9 in Betrieb. Der erste Brenner 3 der ersten Trockentrommel 2 ist außer Betrieb. Der erste Abgaskanal 5 ist mittels des ersten Drosselelements 7 in Schließstellung verschlossen.

Entsprechend ist der zweite Abgaskanal 11 mittels des zweiten Drosselelements 12, dass sich in Freigabestellung befindet, maximal geöffnet. Die Durchströmfläche des zweiten Abgaskanals 11 beträgt 100 %.

Der Ist-Unterdruck in der zweiten Trockentrommel 8 wird mittels des zweiten Trockentrommel-Drucksensors 10 unmittelbar erfasst und als charakterisierender Kennwert an die Regelungseinheit 25 übergeben. In der Regelungseinheit 25 wird die Stellgröße zur Leistungsanpassung für das Gebläse 23 ermittelt und an das Gebläse 23 übertragen.

Da das Regelungsverhalten in der zweiten Trockentrommel 8 sich von dem Regelungsverhalten der ersten Trockentrommel 2 unterscheidet, sind insbesondere für die Regelung auf Basis des Ist-Unterdrucks in der zweiten Trockentrommel 8 separate Regelungsparameter erforderlich. Es ist aber auch möglich, diese Parameter, die für eine Regelung ausschließlich auf Basis der Kennwerte aus der ersten Trockentrommel 2 vorliegen, zu nutzen, wobei eine Anpassung, insbesondere automatisierte, dieser Parameter erforderlich sein kann. Diese Anpassung der Parameter kann insbesondere durch Kippen und/oder Verformen der Schaltlinie erfolgen. Zudem können Verstärkungen der Regelsignale erforderlich sein. Diese Anpassungen erfolgen insbesondere automatisiert und selbsttätig. Der Speicheraufwand für hinterlegte Regelparameter ist reduziert.

Grundsätzlich sind die anhand von Fig. 2 und 3 erläuterten Regelverfahren, für jeweils nur eine Trockentrommel 2 oder 8, miteinander vergleichbar, wobei die Regelparameter, die in der Regeleinheit 25 hinterlegt sind, sich unterscheiden und/oder aufeinander anzupassen sind, insbesondere durch automatisierte Verfahren, insbesondere Interpolation.

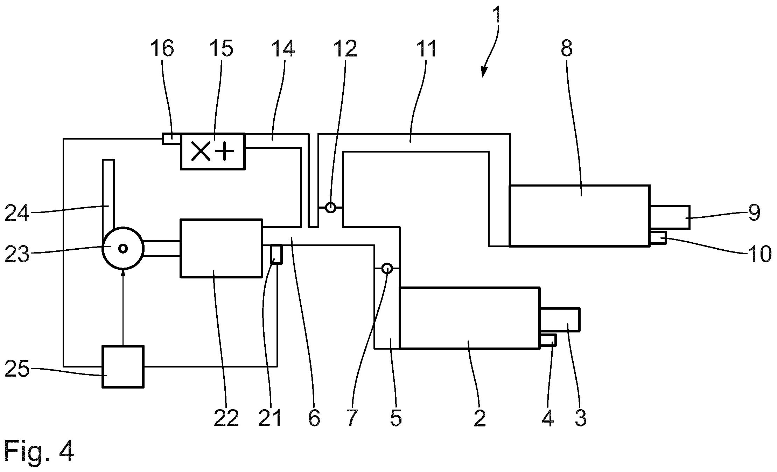

Nachfolgend wird anhand von Fig. 4 ein Verfahren der Anlage 1 beschrieben, wobei ausschließlich ein Mischbetrieb stattfindet, also beide Trockentrommeln 2, 8 inaktiv sind.

Bei dieser Betriebsweise sind beide Abgaskanäle 5, 11 mittels des jeweiligen Drosselelements 7, 12 verschlossen. Eine Abgasabsaugung über den Rohgaskanal 6 aus den Trockentrommeln 2, 8 ist nicht vorgesehen.

In dieser Betriebsweise ist an den Rohgaskanal 6 ausschließlich der Nebenabsaugkanal 14 angeschlossen. Als charakterisierender Kennwert wird mittels des Rohgaskanals-Drucksensors 21 der Ist-Unterdruck in dem Rohgaskanal 6 ermittelt und an die Regelungseinheit 25 übergeben. In der Regelungseinheit 25 wird in der vorstehend beschriebenen Weise die Stellgröße zur Leistungsanpassung des Gebläses 23 ermittelt und dann das Gebläse 23 weitergegeben.

Zusätzlich oder alternativ ist es möglich, den Ist-Unterdruck im Mischer 15 mittels des Mischer-Drucksensors 16 zu erfassen. Die Stellgröße für die Leistungsanpassung des Gebläses 23 kann insbesondere auf Grundlage des Ist-Unterdrucks aus dem Mischer-Drucksensor 16 und/oder dem Rohgaskanal-Drucksensor 21 erfolgen.

Gegebenenfalls ist eine, insbesondere automatisierte, Anpassung der Regelparameter in der Regelungseinheit 25 erforderlich, in Abhängigkeit davon, welche charakteristischen Kennwerte der Bestellgrößenermittlung zu Grunde gelegt werden.

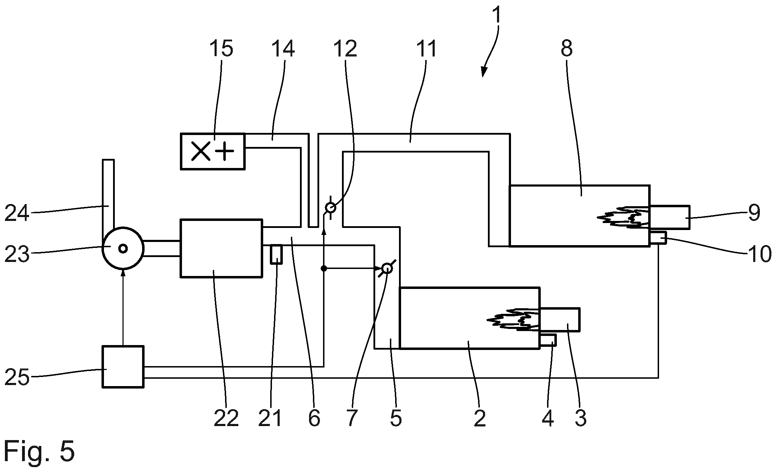

Nachfolgend wird anhand von Fig. 5 eine Betriebsweise der Anlage 1 beschrieben, bei der die erste Trockentrommel 2 und die zweite Trockentrommel 8 parallel, also gleichzeitig, betrieben werden.

Bei dieser Betriebsweise sind der erste Brenner 3 und der zweite Brenner 9 aktiv, sodass eine Trocknung von Material in der ersten Trockentrommel 2 und in der zweiten Trockentrommel 8 stattfindet.

Zunächst wird das erste Drosselelement 7 vollständig geöffnet, sodass der Strömungsquerschnitt des ersten Abgaskanals 5 100 % beträgt. Der Ist-Unterdruck in der ersten Trockentrommel 2 wird mittels des ersten Trockentrommel-Drucksensors 4 erfasst und über die Regelungseinheit 25 und das Gebläse 23 in der bereits beschriebenen Weise geregelt.

Für die Regelung des Ist-Unterdrucks in der zweiten Trockentrommel 8, der mittels des zweiten Trockentrommel-Drucksensors 10 erfasst wird, erfolgt eine Anpassung der Stellung der Drosselelemente 7 und 12 und entlang des ersten Abgaskanals 5 bzw. des zweiten Abgaskanals 11. Die beiden Drosselelemente 7, 12, insbesondere deren Positionen, werden mittels eines Reglers geregelt. Der Regler ist insbesondere in der Regelungseinheit 25 integriert. Der Regler ist beispielsweise als Drei-Punkt-Regler ausgeführt. Eine Bedienperson kann insbesondere eine Drucktoleranz für die zweite Trockentrommel 8 vorgeben.

Wenn das erste Drosselelement 7 nach dem Beginn des Parallelbetriebs der beiden Trockentrommeln 2, 8 die maximale Öffnungsstelle angenommen hat, kann das zweite Drosselelement 12 den Ist-Unterdruck in der zweiten Trockentrommel 8 regeln. Dazu öffnet das zweite Drosselelement 12 bis der Ist-Druck in der zweiten Trockentrommel 8 in dem neutralen Bereich des Reglers liegt. Sollte die zweite Trockentrommel 8 bei maximal geöffneten zweiten Drosselelement 12 nicht genügend Unterdruck erzeugen können, sodass der angestrebte Soll-Unterdruck nicht erreichbar ist, so gibt das zweite Drossel-Element 12 einen Regelbefehl an das erste Drosselelement 7 und verbleibt in der aktuellen Position. Die Position des zweiten Drosselelements 12 wird also "eingefroren".

Mit Übernahme des Regelbefehls von dem zweiten Drosselelement 12 beginnt das erste Drosselelement 7 den Volumenstrom durch die erste Trockentrommel 2, insbesondere durch den ersten Abgaskanal 5 zu reduzieren, sodass dem zweiten Abgaskanal 11 zusätzlicher Volumenstrom zugeführt wird. Gleichzeitig registriert die Regelungseinheit 25 den Ist-Unterdruck in der ersten Trockentrommel 2, dass der Unterdruck in der ersten Trockentrommel 2 abfällt, da das erste Drosselelement 7 mit dem zweiten Abgaskanal 11 als Störung wirkt und dadurch die Drehzahl des Gebläses 23 erhöht wird.

Dadurch wird der Gesamtvolumenstrom, der vom Gebläse 23 verursacht wird, in den beiden Abgaskanälen 5, 11 erhöht, um den angestrebten Soll-Unterdruck in den Trockentrommeln 2 und 8 bereitstellen zu können. In Abhängigkeit der Konstruktion des zweiten Abgaskanals 11 und der eingestellten Brennerleistung des zweiten Brenners 9 muss das erste Drosselelement 7 mehr Volumenstrom in den ersten Abgaskanal 5 einleiten. Insbesondere kann ein einstellbarer Mindestanteil, ein sogenannter einstellbarer Mindeststellgrad, des ersten Drosselelements 7 festgelegt werden, um eine Vorrangregelung für den Ist-Unterdruck in der ersten Trockentrommel 2 mit Vorrang zu gewährleisten. Bei dieser Regelung ist also gewährleistet, dass zumindest der Ist-Unterdruck in der ersten Trockentrommel 2 erreicht wird.

Erhöht sich der Unterdruck in der zweiten Trockentrommel 8 soweit, dass das erste Drosselelement 7 zur Regelung des Ist-Unterdrucks in der zweiten Trockentrommel 8 vollständig geöffnet ist, gibt das erste Drosselelement 7 ein Signal über die Regelungseinheit 25 zurück an das zweite Drosselelement 12. Das zweite Drosselelement 12 kann durch Schließen des Strömungsquerschnitts im zweiten Abgaskanal 11 den Ist-Unterdruck in der zweiten Trockentrommel 8 soweit absenken, bis dieser wieder in dem zulässigen Bereich liegt.

Dadurch, dass die Drosselelemente 7, 12 als zusätzliche Eingangsgrößen für die Regelung des Unterdrucks verwendet werden können und die Drosselelemente 7, 12 in ihre vollständig geöffneten Positionen, in welchen der jeweilige Abgaskanal 5,11 zu 100 % geöffnet ist, eingefroren werden können, ist ein Aufschwingen der Drosselelemente 7, 12 bezüglich ihrer jeweiligen Position und somit auch ein Aufschwingen des Unterdrucks in den Trockentrommeln 2, 8, ausgeschlossen.

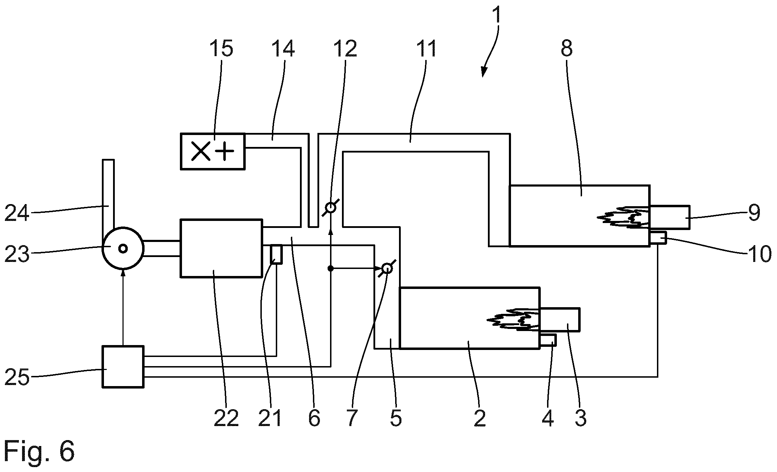

Nachfolgend wir anhand von Fig. 6 die Betriebsweise der Anlage 1 erläutert, in der die beiden Trockentrommeln 2, 8 und die Absaugung des Mischers 15 aktiv sind.

Bei einer derartigen parallelen Betriebsweise wird zunächst der Ist-Unterdruck in der ersten Trockentrommel 2 über den ersten Trockentrommel-Drucksensor 4, die Regelungseinheit 25, sowie das Gebläse 23 geregelt. Der Ist-Unterdruck in der zweiten Trockentrommel 8 wird über die Position des zweiten Drosselelements 12 geregelt.

Das erste Drosselelement 7 regelt bei dieser Betriebsweise den Druck, insbesondere den Unterdruck, im Rohgaskanal 6, indem ein Anteil des Volumenstroms zur ersten Trockentrommel 2 verhindert wird. Dabei wird das erste Drosselelement 7 soweit geschlossen, bis das erste Drosselelement 12 den Volumenstrom entlang des ersten Abgaskanals 5 reduziert.

Um einen Betriebszustandwechsel zwischen den vorstehend genannten Betriebszuständen der Anlage 1 durchzuführen, werden die Drosselelemente 7 und/oder 12 gezielt geöffnet bzw. geschlossen. Dadurch ist es möglich, Unterdruckspitzen und Schwankungen an den Messstellen der Sensoren 4, 10, 16 und 21 zu verhindern. Die Drosselelemente 7, 12 sind insbesondere so aufeinander abgestimmt, dass diese nicht gleichzeitig versuchen, auf denselben Soll-Unterdruck zu regeln.

Es wurde also erkannt, dass der Ist-Unterdruck in der ersten Trockentrommel 2 mittels der Drehzahl des Gebläses 23 geregelt werden kann, wobei die Regelung des Ist-Unterdrucks in der zweiten Trockentrommel 8 mittels der Drosselelemente 7, 12 möglich ist. Eine Erkenntnis der Erfindung liegt also darin, dass die Drosselelemente 7, 12 zur Regelung des Ist-Unterdrucks in den Trockentrommeln 2, 8 genutzt werden können. Eine Erkenntnis der Erfindung besteht auch darin, dass zunächst der Ist-Unterdruck in der ersten Trockentrommel 2 und anschließend der Ist-Unterdruck in der zweiten Trockentrommel 8 geregelt wird. Die Regelung erfolgt sukzessive, also zeitlich gesehen nacheinander. Die Regelung ist robust. Es wurde erkannt, dass die Regelung des Ist-Unterdrucks in der ersten Trockentrommel 2 anhand der Drehzahl des Gebläses 23 erfolgen kann. Dieser Regelungsschritt ist schnell und robust durchführbar. Insbesondere ist es möglich, dass die Drosselelemente 7, 12 den Ist-Unterdruck in der zweiten Trockentrommel 8 unabhängig voneinander beeinflussen. Es ist insbesondere möglich, den Ist-Unterdruck in der zweiten Trockentrommel 8 mittels des ersten Drosselelements 7 und/oder des zweiten Drosselelements 12 zu erreichen. Dazu kann insbesondere jeweils eines der Drosselelemente 7, 12 in der vollständig geöffneten Position angeordnet sein. Aus Effizienzgründen ist im Parallelbetrieb der beiden Trockentrommeln 2, 8 immer eines der beiden Drosselelemente 7, 12 in der vollständig geöffneten Position.

Der Ist-Unterdruck in der zweiten Trockentrommel 8 wird im Parallelbetrieb der beiden Trockentrommeln 2, 8 vorrangig von den Drosselelementen 7, 12 oder möglichen Ventilatoren an diesen Positionen geregelt.

Wenn auf den Betriebszustand der alleinigen Mischerabsaugung gemäß Fig. 4 gewechselt werden soll, müssen zunächst die Drosselelemente 7 und 12 vollständig geschlossen werden, sodass die Trockentrommeln 2, 8 strömungsmäßig vom Rohgaskanal 6 getrennt sind. Erst dann kann die Regelung des Gesamtunterdrucks, insbesondere im Rohgaskanal 6, mittels des Gebläses 23 erfolgen. In diesem Fall wird der aktuelle Stellgrad des Frequenzumformers des Gebläses 23 limitiert, sobald einer der Ist-Unterdrücke in der ersten Trockentrommel 2 und/oder in der zweiten Trockentrommel 8 über dem eingestellten Soll-Unterdruck liegt. Diese Limitierung erfolgt in den Betriebszustandswechseln bis die Drosselelemente 7, 12 der jeweils abgeschalteten Trockentrommel 2, 8 geschlossen sind.

Dadurch wird der Gesamtunterdruck in dem Rohgaskanal gesteigert, erst anschließend wird der Gesamtunterdruck an den gewünschten Sollwert angepasst.

Diese Betriebsweise verhindert, dass zu hohe Prozessunterdrücke in den Trockentrommeln 2, 8 erzeugt werden.

Bei Ausfall mindestens eines Drucksensors 4, 10, 16 und/oder 21 wird dies von der Regelungseinheit 25 erkannt. Die Regelungseinheit 25 kann ein Warnsignal an einen Bediener der Anlage 1 ausgeben. Das Warnsignal kann optisch, insbesondere durch ein Blinklicht, oder akustisch in Folge eines Signaltons erfolgen. Das Warnsignal kann auch kabellos auf einen Leitrechner und/oder auf ein mobiles Endgerät eines zuständigen Bedieners übermittelt werden.

In diesem Fall wird das Stellglied, dessen Funktion von dem Sensor, der ausgefallen ist, beeinflusst werden soll, in seiner Stellung eingefroren. Das Stellglied ist insbesondere das Gebläse 23 oder eines der Drosselelemente 7 und/oder 12. Damit ist verhindert, dass zumindest vorrübergehend das jeweilige Stellglied auf ein Maximum oder Minimum geregelt wird. Es erfolgt eine Umschaltung in den Handbetrieb, die ein Bediener übernehmen kann, indem er insbesondere sich für die Anpassung der Position des Stellglieds verantwortlich zeigt. Ein derartiger Betrieb ist ein Sicherheitsbetrieb, der eine Funktionsweise der Anlage auch dann gewährleistet, wenn mindestens einer der Sensoren 4, 10, 16 und/oder 21 ausfällt.

Ein Ausfall des Sensors ist beispielsweise auch dann gegeben, wenn die Signalleitung zwischen dem jeweiligen Sensor und der Regelungseinheit 25 unterbrochen ist, sodass die ermittelten Kennwerte zur Ermittlung der Stellgröße nicht mehr an die Regelungseinheit 25 übermittelt werden können.

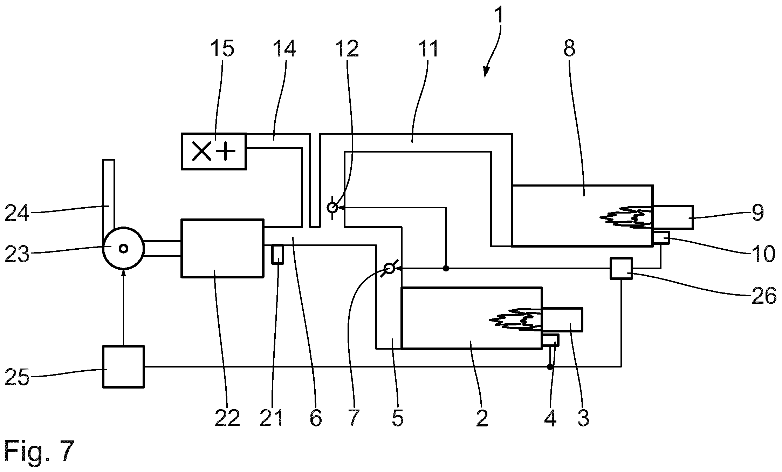

Nachfolgend wird anhand der Fig. 7 eine weitere Betriebsweise der Anlage 1 näher erläutert.

In dieser Betriebsweise ist eine Grenzzustandsregelung dargestellt. Eine Grenzzustandsregelung ist dann erforderlich, wenn das Gebläse 23 aufgrund der mechanischen Auslegung des Strömungsnetzwerks, also insbesondere des Rohgaskanals 6, des ersten Abgaskanals 5 und des zweiten Abgaskanals 11, und/oder aufgrund übertriebener Trockenleistung in der ersten Trockentrommel 2 und der zweiten Trockentrommel 8 überlastet ist und insbesondere an den Anschlag des Stellbereichs gelangt. Wenn die Regelungseinheit 25 einen derartigen Grenzzustand erkennt, wird eine sogenannte Verhältnisregelung zwischen den Unterdrücken in der ersten Trockentrommel 2 und in der zweiten Trockentrommel 8 aktiviert, um beide Trockentrommeln 2, 8 in diesem Betriebspunkt noch ausreichend absaugen zu können.

Das Unterdruck-Verhältnis der beiden Trockentrommeln 2, 8 sowie eine Unterdrucktoleranz, also der Bereich, in dem der geforderte Soll-Unterdruck in den Trockentrommeln 2, 8 in der Grenzzustandsregelung nicht genau eingehalten werden muss, kann von einer Bedienperson der Anlage 1 eingestellt werden. Die beiden Drosselelemente 7, 12 teilen den von dem Gebläse 23 maximal zur Verfügung gestellten Unterdruck in Abhängigkeit ihrer Stellposition auf die beiden Trockentrommeln 2, 8 auf. Dazu ist eine zusätzliche Verhältnisregelung 26 vorgesehen, die insbesondere auch in die Regelungseinheit 25 integriert sein kann. Mittels der Verhältnisregelung werden die Stellpositionen der Drosselelemente 7, 12 unmittelbar beeinflusst. Aus Effizienzgründen ist im Parallelbetrieb der beiden Trockentrommeln 2, 8 immer eines der beiden Drosselelemente 7, 12 in der vollständig geöffneten Position.

Vorteilhaft ist es, wenn nur dasjenige Drosselelement 7, 12 aktiviert wird, das von dem jeweils anderen Drosselelement 12, 7 die Regelfreigabe erhält. Wird der Soll-Unterdruck in der ersten Trockentrommel 2 wieder erreicht und die Drehzahl des Gebläses 23 reduziert, setzt die Normalbetriebsregelung wieder ein und die Grenzzustandsregelung wird deaktiviert, indem insbesondere über das Druckverhältnis in den Trockentrommeln 2, 8 derart angepasst wird, dass keine der Trockentrommeln 2, 8 einen Überdruck erfährt.

## Patentansprüche

1. Verfahren zum Bereitstellen eines geregelten Unterdrucks in mindestens einer Trockentrommel (2, 8) einer Anlage (1) zur Asphaltherstellung, wobei das Verfahren die Schritte aufweist
- Trocknen von Material in der mindestens einen Trockentrommel (2,8),
- Absaugen von Staub aus der mindestens einen Trockentrommel (2, 8) mittels eines über einen Rohgaskanal (6) an die mindestens eine Trockentrommel (2, 8) angeschlossenen Gebläses (23),
- Erfassen eines den Druck in der mindestens einen Trockentrommel (2, 8) charakterisierenden Kennwertes mittels eines Sensors (4, 10, 16, 2),
- Übermitteln des Kennwertes an eine Regelungseinheit (25),
- Ermitteln einer Stellgröße für die Leistung des Gebläses (23) mittels der Regelungseinheit (25),
- Regeln der Leistung des Gebläses (23) mit der Stellgröße (26).

2. Verfahren gemäß Anspruch 1, **dadurch gekennzeichnet, dass** zur Anpassung der Leistung des Gebläses (23) dessen Drehzahl angepasst wird.

3. Verfahren gemäß einem der vorstehenden Ansprüche, **dadurch gekennzeichnet, dass** als Kennwert eine Filtereingangstemperatur und/oder eine Filterverschmutzung eines Filters (22) verwendet werden, wobei der Filter (22) insbesondere stromaufwärts des Gebläses an den Rohgaskanal (6) angeschlossen ist.

4. Verfahren gemäß einem der vorstehenden Ansprüche, **dadurch gekennzeichnet, dass** als Kennwert ein Druckwert eines Trockentrommel-Drucksensors (4, 10) der mindestens einen Trockentrommel (2, 8) verwendet wird.

5. Verfahren gemäß einem der vorstehenden Ansprüche, **dadurch gekennzeichnet, dass** als Kennwert ein Druckwert eines Rohgaskanal-Drucksensors (21) des Rohgaskanals (6) verwendet wird.

6. Verfahren gemäß einem der vorstehenden Ansprüche, **dadurch gekennzeichnet, dass** zum Ermitteln der Stellgröße der Kennwert mit einer in der Regelungseinheit (25) gespeicherten Kennlinie angepasst wird.

7. Verfahren gemäß einem der vorstehenden Ansprüche, **dadurch gekennzeichnet, dass** ein erstes Material in einer ersten Trockentrommel (2) und ein zweites Material in einer zweiten Trockentrommel (8) getrocknet werden.

8. Verfahren gemäß Anspruch 7, **gekennzeichnet durch** ein, insbesondere vollständiges, Freigeben eines ersten Abgaskanals (5), mit dem die erste Trockentrommel (2) an den Rohgaskanal (6) angeschlossen ist (7), und, insbesondere kontinuierliches, Regeln des Drucks in der ersten Trockentrommel (2) mittels des ersten Trockentrommel-Drucksensors (4) und des Gebläses (23).

9. Verfahren gemäß Anspruch 8, **gekennzeichnet durch** ein Regeln des Drucks in der zweiten Trockentrommel (8) durch Anpassen des jeweiligen Strömungsquerschnitts des ersten Abgaskanals (5) und/oder eines zweiten Abgaskanals (11), mit dem die zweite Trockentrommel (8) an den Rohgaskanal (6) angeschlossen ist.

10. Verfahren gemäß einem der Ansprüche 7 bis 9, **gekennzeichnet durch** eine Anpassung des Verhältnisses der Drücke in den Trockentrommeln (2, 8), wenn die Maximalleistung des Gebläses (23) für eine Einhaltung der Sollwerte der Absolutdrücke in den Trockentrommeln (2, 8) nicht ausreicht.

11. Verfahren gemäß einem der vorstehenden Ansprüche, **gekennzeichnet durch** einen Sicherheitsbetrieb bei Ausfall des Sensors (4, 10, 16, 21).

12. Anlage (1) zur Asphaltherstellung mit
- mindestens einer Trockentrommel (2, 8) zum Trocknen von Material,
- einem über einen Rohgaskanal (6) an die mindestens eine Trockentrommel (2, 8) angeschlossenen Gebläse (23) zum Absaugen von Staub aus der mindestens einen Trockentrommel (2, 8),
- einem Sensor (4, 10, 16, 21) zum Erfassen eines den Druck in der mindestens einen Trockentrommel (2, 8) charakterisierenden Kennwertes,
- eine mit dem Sensor (4, 10, 16, 21) und mit dem Gebläse (23) in Signalverbindung stehende Regelungseinheit (25) zum Regeln der Leistung des Gebläses (23) auf Basis des mittels des Sensors (4, 10, 16, 21) erfassten Kennwerts.

13. Anlage gemäß Anspruch 12, **gekennzeichnet durch** eine zum Trocknen eines ersten Materials vorgesehene erste Trockentrommel (2), die über einen ersten Abgaskanal (5) an den Rohgaskanal (6) angeschlossen ist, und eine zum Trocknen eines zweiten Materials vorgesehene zweite Trockentrommel (8), die über einen zweiten Abgaskanal (11) an den Rohgaskanal (6) angeschlossen ist.

14. Anlage gemäß Anspruch 12 oder 13, **gekennzeichnet durch** einen Filter (22), der stromaufwärts des Gebläses (23) angeordnet ist.

15. Anlage gemäß einem der Ansprüche 12 bis 14, **gekennzeichnet durch** einen Mischer (15), der an den Rohgaskanal (6) angeschlossen ist.
